(19) Europäisches Patentamt
European Patent Office
Office européen des brevets

(11) Veröffentlichungsnummer : **0 150 069**
**B1**

(12) # EUROPÄISCHE PATENTSCHRIFT

(45) Veröffentlichungstag der Patentschrift : **09.11.88**

(51) Int. Cl.[4] : **C 03 B 37/012**, C 03 B 37/018, C 03 B 37/025

(21) Anmeldenummer : **85100576.9**

(22) Anmeldetag : **22.01.85**

(54) **Verfahren zur Dotierung von Lichtwellenleitergrundmaterial auf Quarzglasbasis mit Germanium.**

(30) Priorität : **24.01.84 DE 3402318**

(43) Veröffentlichungstag der Anmeldung : **31.07.85 Patentblatt 85/31**

(45) Bekanntmachung des Hinweises auf die Patenterteilung : **09.11.88 Patentblatt 88/45**

(84) Benannte Vertragsstaaten : **AT CH DE FR GB IT LI NL SE**

(56) Entgegenhaltungen : **GB-A- 2 029 400**

(73) Patentinhaber : **SUMITOMO ELECTRIC INDUSTRIES, LIMITED**
**15, Kitahama 5-chome Higashi-ku**
**Osaka-shi Osaka-fu (JP)**

(72) Erfinder : **Griesshammer, Rudolf, Dr. Dipl.-Chem.**
**Megerleweg 6**
**D-8262 Altötting (DE)**
Erfinder : **Staudigl, Rudolf, Dr. Dipl.-Chem.**
**Elisabethstrasse 14**
**D-8263 Burghausen (DE)**
Erfinder : **Herrmann, Hans, Dr. Dipl.-Phys.**
**Lindenweg 30**
**D-8263 Burghausen (DE)**

(74) Vertreter : **Lehn, Werner, Dipl.-Ing. et al**
**Hoffmann, Eitle & Partner Patentanwälte Arabellastrasse 4**
**D-8000 München 81 (DE)**

**EP 0 150 069 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren zur Herstellung von mit Germanium dotierten Lichtwellenleitern auf Quarzglasbasis durch Umsetzung von zu Siliciumdioxid oxidierbarem Gas mit Sauerstoff oder unter den Reaktionsbedingungen Sauerstoff freisetzenden Gasen in Gegenwart von Germaniumtetrachlorid. Solch ein Verfahren ist aus der GB-A-2 029 400 bekannt.

Es ist in der Lichtwellenleitertechnologie bekannt, den Brechungsindex von Quarzglas durch Dotieren mit Germanium zu erhöhen. Bei den üblichen Verfahren wird zu diesem Zweck gleichzeitig mit der Umsetzung des Quarzglasbildners Siliciumtetrachlorid mit Sauerstoff ein bestimmter Anteil von Germaniumtetrachlorid zur Reaktion gebracht, wodurch sich letztlich ein mit Germanium dotiertes Quarzglas ergibt.

Jedoch werden beispielsweise bei der Herstellung von Lichtwellenleitergrundmaterial nach dem sogenannten MCVD (modified chemical vapour depositon)-Verfahren bei einer Reaktionstemperatur von oberhalb 1 430 °C nur etwa 20 % des eingesetzten Germaniumtetrachlorids tatsächlich zu $GeO_2$ umgesetzt, während die restlichen etwa 80 % den Reaktionsraum unwirksam verlassen.

Wie in einer Veröffentlichung von M. P. Bohrer, J. A. Amelse, P. L. Narasimham, B. K. Tariyal, J. M. Turnipseed und R. F. Gill (9th European Conference on Optical Communication, H. Melchior and A. Solberger (editors), Elsevier Science Publishers B. V. (North-Holland) 1983, S. 365-368) und einigen dort zitierten Arbeiten ausgeführt wird, liegt die Ursache dafür in der ungünstigen Lage des Gleichgewichtes

$$GeCl_4 + O_2 \rightleftarrows GeO_2 + 2Cl_2$$

welches durch hohe Chlorkonzentrationen, z. B. aus der Umsetzung des Siliciumtetrachlorids, nach links in Richtung des flüchtigen $GeCl_4$ verschoben wird. Überdies werden von dem $GeCl_4$, welches zu $GeO_2$ abreagiert hat, nur 30-40 % tatsächlich auch als sogenannter « soot » abgelagert und können somit als Dotierstoff wirken. Verluste in solchem Ausmaß sind angesichts des hohen Preises von $GeCl_4$ wirtschaftlich nicht vertretbar.

Zwar ist in der oben zitierten Publikation ein Verfahren angegeben, gemäß dem sich das nicht verbrauchte Germanium aus dem Abgasstrom größtenteils abfangen und nach Wiederaufbereitung wieder einsetzen läßt. Dies ändert jedoch nichts an der Tatsache, daß die eigentliche Reaktion des $GeCl_4$ zu $GeO_2$ mit unbefriedigender Ausbeute verläuft, so daß nach wie vor große Mengen des wertvollen $GeCl_4$ vorgelegt werden müssen, um eine demgegenüber verhältnismäßig geringe Dotierstoffmenge zu erhalten.

Aufgabe der Erfindung war es, ein Verfahren anzugeben, welches eine effektivere Germaniumdotierung von Quarzglas gestattet.

Gelöst wird diese Aufgabe durch ein Verfahren, welches dadurch gekennzeichnet ist, daß als zu Siliciumdioxid oxidierbares Gas Siliciumchloride der Formel $Si_nCl_{2n+2}$ mit n = 2 bis 6 eingesetzt werden.

Zwar ist in der russischen Anmeldung 88 74 63, offengelegt 07.12.81, Autoren W. F. Kotschubej et al., die die Herstellung von hochdispersem Siliciumdioxid hoher Reinheit durch Reaktion $Si_2Cl_6$ mit Sauerstoff zum Gegenstand hat, auch die Möglichkeit angesprochen, das erhaltene $SiO_2$ für die Herstellung optischer Fasern zu verwenden. Bei diesem Verfahren fällt das $SiO_2$ jedoch in undotiertem Zustand an und kann unter den genannten Bedingungen auch nicht wirksam dotiert werden, so daß es für die Herstellung von dotiertem Quarzglas nicht infrage kommt.

Das erfindungsgemäße Dotierverfahren kann grundsätzlich bei allen für die Herstellung von germaniumdotiertem Lichtwellenleitergrundmaterial auf Quarzglasbasis üblichen und dem Fachmann bekannten Verfahren eingesetzt werden, bei denen die Dotierung durch Gasphasenreaktion von Germaniumtetrachlorid erfolgt. Solche Verfahren sind beispielsweise das sogenannte MCVD-(modified chemical vapour deposition)-Verfahren, das IVPO-(inside vapour phase oxidation)-Verfahren, das OVPO(outside vapour phase oxidation)-Verfahren oder das VAD(vapour axial deposition)-Verfahren.

Es ist dabei auch möglich, mit verschiedenen Dotierstoffen dotiertes Lichtwellenleitergrundmaterial herzustellen, indem lediglich die Germaniumdotierung nach dem erfindungsgemäßen Verfahren vorgenommen wird, während für die Dotierung mit anderen Dotierstoffen, z. B. Bor oder Phosphor, konventionelle Verfahren, also z. B. Reaktion von Siliciumtetrachlorid mit Sauerstoff in Gegenwart der jeweils gewählten Dotierstoffverbindung, eingesetzt werden.

Bei der Auswahl der geeigneten Siliciumchloride sind vor allem zwei Gesichtspunkte zu beachten. Einerseits sind umso niedrigere Germaniumverluste zu erwarten, je weniger Chlor bei der Bildung von Quarz aus den Siliciumchloriden freigesetzt wird. Demnach wäre der Einsatz von möglichst siliciumreichen Chlorsilanen, wie z. B. $Si_4Cl_{10}$, $Si_5Cl_{12}$ oder $Si_6Cl_{14}$ anzustreben. Diese Halogenide sind jedoch verhältnismäßig schwer in die Gasphase überzuführen, so daß ihre Verwendung erhöhten experimentellen Aufwand, z. B. den Einsatz von Vakuum, erfordert. Derartige Verfahren sind beispielsweise in der DE-C-24 44 100 für $SiCl_4$/Sauerstoff bei 1-10 Torrbeschrieben und lassen sich sinngemäß auch auf siliciumreichere Chlorsilane übertragen.

Bevorzugt werden bei dem erfindungsgemäßen Verfahren jedoch Octachlortrisilan oder insbesondere Hexachlordisilan eingesetzt, welche bei ihrer Umsetzung zwar eine größere Menge Chlor entwickeln, dafür aber wegen ihrer günstigen Siedepunkte leicht in die Gasphase überzuführen sind

und daher eine weniger aufwendige Arbeitsweise gestatten.

Die Siliciumchloride $Si_nCl_{2n+2}$ mit n = 2 bis 6, insbesondere Hexachlordisilan, fallen beispielsweise bei der Herstellung von Reinstsilicium durch Zersetzung von Trichlorsilan auf erhitzten Trägerkörpern oder bei der Konvertierung von Siliciumtetrachlorid zu Trichlorsilan als Nebenprodukte in den Abgasen an, aus welchen sie sich z. B. durch Auskondensieren abtrennen und anschließend durch Destillation aufarbeiten und isolieren lassen. Der Vorteil dieses Verfahrens liegt, neben der Nutzung von bisher nicht verwendbaren Abfallstoffen, darin, daß die Siliciumchloride in hoher Reinheit erhalten werden. Aus diesem Grund wird man in der Regel eher auf Siliciumchloride, die im Zusammenhang mit der Reinstsiliciumherstellung anfallen, als auf auf andere Art, z. B. aus Siliciden, erhältliche Siliciumchloride zurückgreifen.

Zweckmäßig werden die jeweils ausgewählten Siliciumchloride in möglichst reiner Form, d. h. möglichst ohne Beimengung anderer Siliciumchloride eingesetzt, um bei der Glasbildung eine genaue Einstellung des Siliciumanteils bzw. des Silicium-Germanium-Verhältnisses zu ermöglichen. Insbesondere ist auch auf die Abtrennung etwaiger wasserstoffhaltiger Fraktionen zu achten.

Bei der Glasbildungsreaktion, bei welcher durch Umsetzung von Siliciumchlorid, Germaniumchlorid und Sauerstoff Quarzglas mit der gewünschten Dotierung gebildet wird, werden zweckmäßig Temperaturen im Bereich von 1 100-1 600 °C eingehalten. Diese lassen sich, jeweils nach Maßgabe des ausgewählten Herstellungsverfahrens, z. B. mit Hilfe von Brennern oder Plasma- bzw. Widerstandsheizung, einstellen.

Der für die Reaktion benötigte Sauerstoff kann dem Reaktionsraum in Form eines oder mehrerer, gegebenenfalls bereits mit den Reaktanten beladener Sauerstoffgasströme zugeführt werden. Daneben kommt auch der teilweise oder vollständige Ersatz des Sauerstoffes durch andere Gase infrage, die unter den Reaktionsbedingungen Sauerstoff freisetzen, wie etwa Distickstoffmonoxid, Stickstoffmonoxid, oder Kohlendioxid. Gleichfalls möglich ist der Zusatz von Inertgasen, wie Stickstoff oder Argon, beispielsweise zur Beeinflussung der Strömungs- und Konzentrationsverhältnisse.

In diesem Zusammenhang hat sich eine Vorbehandlung dieser eingesetzten Hilfsgase mit $D_2O$ gemäß der EP-A1-0 141 365 bewährt, da sich auf diese Art ein besonders OH-armes Quarzglas erhalten läßt.

Bei der Herstellung dotierten Quarzglases nach dem erfindungsgemäßen Verfahren kann im Grunde die Vorgehensweise beibehalten werden, die für die konventionellen Verfahren auf Siliciumtetrachloridbasis bekannt ist. In der Regel genügt es, anstelle des $SiCl_4$ das gewählte Siliciumchlorid, vorzugsweise Hexachlordisilan, einzuspeisen. Dies kann in einfacher Weise z. B. dadurch geschehen, daß ein zur Beladung des Trägergases, z. B. Sauerstoff, mit Siliciumchloriden vorgesehener Verdampfer anstelle von $SiCl_4$ mit $Si_2Cl_6$ oder $Si_3Cl_8$ beschickt und auf die dem gewünschten Dampfdruck des gewählten Siliciumchlorids entsprechende Temperatur thermostatisiert wird. Selbstverständlich ist dann auch der Anteil des Germaniumtetrachlorids, welches zumeist über einen separaten zweiten Gasstrom der Reaktionszone zugeführt wird, entsprechend der im Quarzglas gewünschten Germaniumkonzentration anzupassen.

Somit kann durch den erfindungsgemäßen Einsatz von Siliciumchloriden $Si_nCl_{2n+2}$ mit n = 2 bis 6, insbesondere von Hexachlordisilan, bei der Herstellung von germaniumdotiertem Quarzglas die Ausnutzung des als Dotierstoff eingesetzten, teuren Germaniumtetrachlorids gegenüber Siliciumtetrachlorid ohne großen apparativen Mehraufwand deutlich gesteigert werden.

Ausführungsbeispiel

Aus dem bei der Herstellung von elementarem Reinstsilicium durch Zersetzung von Trichlorsilan auf erhitzten Trägerkörpern anfallenden Abgasgemisch durch Kondensation und anschließende Destillation isoliertes Hexachlordisilan wurde in einem Verdampfer vorgelegt. Durch die auf 130 °C gehaltene Flüssigkeit wurde ein auf 80 °C vorgewärmter Sauerstoffstrom geperlt. In den resultierenden mit $Si_2Cl_6$ gesättigten Sauerstoffstrom wurde ein in analoger Weise erhaltener, mit Germaniumtetrachlorid gesättigter Sauerstoffstrom eingespeist. Die vereinigten Gasströme wurden, um ein Auskondensieren der Beimischungen zu verhindern, über thermostatisierte Leitungen zu der Reaktionszone geführt, wo sie durch eine Düse in ein mittels eines Rohrofens auf 1 500 °C aufgeheiztes Quarzglasrohr eingeblasen wurden. Die Reaktion ergab einen mit Germanium dotierten Quarzglasruß, welcher in einem Auffanggefäß gesammelt wurde.

Insgesamt wurde im Verlauf der Umsetzung eine Menge von 150 ml $Si_2Cl_6$ und 80 ml $GeCl_4$, entsprechend einem Molverhältnis von 1 : 0,77, mit einem ca. 2-fachen Überschuß an Sauerstoff zur Reaktion gebracht. Es ließen sich 126 g einer pulverförmigen, zu einem Glaskörper sinterbaren Substanz isolieren, welche 9,9 Mol-% $GeO_2$ (entsprechend einem Gemisch aus 22 g $GeO_2$ und 104 g $SiO_2$) enthielt. Damit betrug die Ausbeute an $SiO_2$ 98,2 %, bezogen auf eingesetztes $Si_2Cl_6$, und an $GeO_2$ 27,9 %, bezogen auf eingesetztes $GeCl_4$.

In einem Vergleichsversuch wurde unter ansonsten gleichen Bedingungen ein Gemisch aus Siliciumtetrachlorid und Germaniumtetrachlorid mit demselben Si/Ge-Verhältnis (Molverhältnis 2 : 0,77) mit einem ca. 2-fachen Überschuß an Sauerstoff zur Reakion gebracht. Das erhaltene Produkt besaß einen Gehalt von 7.2 Mol-% $GeO_2$. Die Ausbeute an $SiO_2$ belief sich damit auf 96.0 %, bezogen auf eingesetztes $SiCl_4$, während die auf eingesetztes $GeCl_4$ bezogene Ausbeute an $GeO_2$ lediglich 19,5 % betrug.

**Patentansprüche**

1. Verfahren zur Herstellung von mit Germanium dotierten Lichtwellenleitern auf Quarzglasbasis durch Umsetzung von zu Siliciumdioxid oxidierbarem Gas mit Sauerstoff oder unter den Reaktionsbedingungen Sauerstoff freisetzenden Gasen in Gegenwart von Germaniumtetrachlorid, dadurch gekennzeichnet, daß als zu Siliciumdioxid oxidierbares Gas Siliciumchloride der Formel $Si_nCl_{2n+2}$ mit n = 2 bis 6, eingesetzt werden.

2. Verfahren nach Anspruch 1, dadurch gekennzeichnet, daß als zu Siliciumdioxid oxidierbares Gas Hexachlordisilan eingesetzt wird.

3. Verfahren nach den Ansprüchen 1 und 2, dadurch gekennzeichnet, daß eine Reaktionstemperatur von 1 100 bis 1 600 °C eingehalten wird.

**Claims**

1. A method for the manufacture of optical fibres based upon quartz glass doped with germanium by reacting a gas which is oxidisable to silicon dioxide with oxygen or gases capable of releasing oxygen under the reaction conditions, in the presence of germanium tetrachloride, characterised in that silicon chlorides of the formula $Si_nCl_{2n+2}$, wherein n is 2-6, are employed as the gas which can be oxidised to silicon dioxide.

2. A method according to claim 1 characterised in that hexachloro-disilane is employed as the gas which can be oxidised to silicon dioxide.

3. A method according to claim 1 or claim 2 characterised in that the reaction is carried out at a temperature of 1 100 to 1 600 °C.

**Revendications**

1. Procédé de préparation de guides d'ondes lumineuses à base de verre de quartz dopés par du germanium, par réaction de gaz oxydables en silice avec l'oxygène ou des gaz libérant de l'oxygène dans les conditions de la réaction en présence de tétrachlorure de germanium, caractérisé en ce que l'on utilise en tant que gaz oxydables en silice des chlorures de silicium de formule $Si_nCl_{2n+2}$ avec n = 2 à 6.

2. Procédé selon la revendication 1 caractérisé en ce que l'on utilise en tant que gaz oxydable en silice l'hexachlorodisilane.

3. Procédé selon les revendications 1 et 2 caractérisé en ce que l'on maintient une température de réaction de 1 100 à 1 600 °C.